# EUROPÄISCHE PATENTSCHRIFT

(11) **EP 1 459 796 B1**
(45) Veröffentlichungstag und Bekanntmachung des Hinweises auf die Patenterteilung: **24.06.2009**
(21) Anmeldenummer: 04006846.2
(22) Anmeldetag: 22.03.2004
(51) Int. Cl.: B01D 39/08

(54) **Filtermaterial**
Filter material
Matériau filtrant

(30) Priorität: 20.03.2003 RU 2003107656
(43) Veröffentlichungstag der Anmeldung: 22.09.2004
(73) Patentinhaber: Tchekalov, Lev Valentinovich, Rostov area, Yaroslavl region 152020 (RU); Tchekalov, Vladimir Valentinovich, Peresslavl, Yaroslavl region 152020 (RU)
(72) Erfinder: Tchekalov, Lev Valentinovich, Rostov area, Yaroslavl region 152020 (RU); Tchekalov, Vladimir Valentinovich, Peresslavl, Yaroslavl region 152020 (RU)
(74) Vertreter: Schwabe - Sandmair - Marx

(56) Entgegenhaltungen:
- EP-A- 0 199 528
- GB-A- 1 594 700
- US-A- 5 685 887
- DATABASE WPI Week 197913 Derwent Publications Ltd., London, GB; AN 1979-24966B XP002284377 -& JP 54 024280 A (YUASA BATTERY) 23. Februar 1979 (1979-02-23)
- PATENT ABSTRACTS OF JAPAN Bd. 8, Nr. 19, 26. Januar 1984 (1984-01-26) -& JP 58 186414 A (MATSUBARA HIROSHI), 31. Oktober 1983 (1983-10-31)

## Beschreibung

Die Erfindung betrifft ein Filtermaterial mit Ausbauchungen.

Allgemein bezieht sich die Erfindung auf die Filtrierung von Schwebestoffen und Staub aus Flüssigkeiten und Gasen und kann bei unterschiedlichen Ausführungsformen von Filterelementen verwendet werden, wie sie in verschiedenen Industriezweigen eingesetzt werden.

Für die Filtrierung von Flüssigkeiten und Gasen sind rollenförmige bzw. aufrollbare Filtermaterialien bekannt, nämlich gewebte Tuche einerseits (siehe Oleg Kaschejew "Der russische Markt für technische Textilien: Analyse, Probleme, Tendenzen und Perspektiven seiner Entwicklung" in "Textil" 1 (1) September 2002) sowie nicht gewebte bzw. Non-Woven Tuche (siehe S.W. Konjuchowa, G.K. Muchamedshanow, T.F. Sufjagina "Über die Nomenklatur von Non-Woven Filtermaterialien und ihre Anwendungsgebiete" in "Textil" 1 (2) September 2002.

Der wesentliche Nachteil der dort beschriebenen Materialien liegt darin, dass sie eine flache, praktisch ebene Filteroberfläche haben, d.h. die Filtrationsfläche ist gleich der Fläche des Schnitts des zu filternden Gas- oder Flüssigkeitsstrom. Dadurch wird es notwendig, zur wirksamen Reinigung eines vorgegebenen Gas-Volumens Filter mit einem extrem großen Volumen zu verwenden.

Es ist auch bereits bekannt, gewellte Filtermaterialien aus gewebten und/oder Non-Woven-Tuchen zu verwenden, siehe beispielsweise die gewellten Filterelemente "PulsPleat" aus dem Prospekt der Fa. VNA, USA, aus dem Jahre 2002. Im Vergleich zur Fläche des Schnitts des zu filternden Stroms lässt sich dadurch die Filterfläche vergrößern.

Der wesentliche Nachteil solcher gewellten Filtermaterialien liegt in dem Entstehen hoher innerer Spannungen an den Ecken der Wellen, die zu einem vorzeitigen Verschleiß des Filtermaterials führen, und ihre erschwerte Regeneration (also die Reinigung ihrer Oberfläche von Schmutz) im Zusammenhang mit einer Verstopfung der Hohlräume mit scharfen Ecken.

Weiterhin geht aus der US-A-5,685,887 ein Filterelement hervor, dessen Filtermaterial aus Tuch, Papier, Non-Woven-Textilien oder ähnlichen Materialien besteht und zu einer zylindrischen Form gewickelt wird. Um den Filterbereich der Filteroberfläche zu vergrößern, wird eine Reihe von Hügeln und Tälern in der gewellten Querschnittsform des Filtermaterials gebildet, und zwar unter einem bestimmten Neigungswinkel, von der Vorderseite aus gesehen. Dadurch entstehen gewinkelte Falten, die die Luft im Innern der zylindrischen Form zu einer laminar und im Allgemeinen turbulenzfreien Strömung der gefilterten Luft durch den offenen Boden des Filterelementes ablenken.

Der Erfindung liegt die Aufgabe zugrunde, ein Filtermaterial zu schaffen, bei dem die oben erwähnten Nachteile nicht auftreten. Insbesondere soll ein Filtermaterial vorgeschlagen werden, das bei vorgegebener Fläche des Querschnittes des zu filternden Stroms eine entwickelte bzw. vergrößerte Filterfläche sowie eine erhöhte Zuverlässigkeit und wirksame Regenerationsfähigkeit hat.

Dies wird durch die Merkmale des Anspruchs 1 erreicht.

Zweckmäßige Ausführungsformen werden durch die Merkmale der Unteransprüche definiert.

Das erfindungsgemäße Filtermaterial besteht aus mindestens einer Lage aus Filtertuch, das reliefartig ausgeführt ist und Ausbauchungen in der Richtung des zu filternden Flüssigkeits- oder Gasstroms hat. Dadurch ergibt sich eine Vergrößerung der Filterfläche bei vorgegebener Fläche des Gas- oder Flüssigkeits-Querstroms sowie eine Erhöhung der Zuverlässigkeit des Filtermaterials, eine Verbesserung seiner Regenerierung und damit insgesamt eine Verringerung der Kosten für die Reinigung von verschmutzten Gas- oder Flüssigkeits-Strömen.

Das Filtertuch kann aus einem herkömmlichen, gewebten Tuch oder einem Non-Woven-Textilmaterial bestehen.

Die exakte Form der Ausbauchungen ist von untergeordneter Bedeutung, es ist nur wichtig, dass keine scharfen Ecken vorhanden sind.

Die Anordnung der Ausbauchungen auf dem Filtertuch kann regelmäßig oder auch nicht regelmäßig sein.

Ein wichtiger Parameter ist jedoch die Höhe der Ausbauchungen, die das 0,1- bis 10-fache der charakteristischen Länge der Basis einer Ausbauchung betragen soll.

Ist die Höhe der Ausbauchung kleiner als das 0,1-fache der charakteristischen Länge der Basis der Ausbauchung, also ihrem Boden-Durchmesser so ergibt sich fast eine Ebene, und der Beitrag der Ausbauchung zur Vergrößerung der Filterfläche wird unbedeutend. Hat die Ausbauchung eine Höhe von mehr als das 10,0-fache der charakteristischen Länge der Basis, so wird die Regenerierung des Filtermaterials mühsam und umständlich und damit aufwändig.

Zwischen den Ausbauchungen des Filtertuchs liegt ein Verstärkungsstreifen aus einem festeren Material als das Filtertuch. Hierfür kommen die auch für den Aufbau eines Reifens bekannten Materialien in Frage, insbesondere ein Cord-Streifen oder ein ähnliches, hochfestes Material. Dieser Verstärkungsstreifen kann entweder auf die Außenseite des Filtertuchs aufgebracht oder in das Filtertuch eingebettet werden und ermöglicht eine Erhöhung der Verschleißfestigkeit des Filtermaterials beim Betrieb und damit eine Verlängerung seiner Lebensdauer.

Obwohl bereits eine einzigen Lage aus einem Filtertuch mit den erörterten Ausbauchungen zu den geschilderten Vorteilen führt, werden nach einer bevorzugten Ausführungsform zwei oder drei solcher Lagen in einer Art Sandwichbauweise nebeneinander angeordnet. Die einzelnen Lagen aus Filtertuch können durch Fäden auf den zusammenfallenden Höhen und Senken der Ausbauchungen zusammengeheftet werden.

Das Filtermaterial kann jedoch auf verschiedenen Wegen gewonnen werden. Beispielsweise können Filtertücher aus Non-Woven-Materialien dadurch hergestellt werden, dass die reliefartigen Ausbauchungen auf der Oberfläche des Ausgangsmaterials zwischen entsprechend profilierten Walzen geformt werden. Bei Filtertüchern aus gewebten Materialien kann z.B. die Ausformung der Ausbauchungen in den Webvorgang integriert werden.

Die geschlossene Fläche der Ausbauchungen des Filtermaterials sowie die Ausführung ihrer Oberfläche mit gleichmäßigen Übergängen ermöglicht es, eine große Fläche für die Oberflächen-Filtration bei einer vorgegebenen Fläche des Querschnitts des zu filternden Gas- oder Flüssigkeitsstroms zur Verfügung zu stellen. Filterelemente, die ein solcher Filtermaterial verwenden, nehmen ein kleineres Volumen ein, wodurch der Aufwand für Reinigungsanlagen verringert und damit ihr Wirkungsgrad erhöht werden kann.

Die Vermeidung von scharfen Kanten bei der Ausführung der Ausbauchungen erhöht die Verschleißfestigkeit des Filtermaterials und damit erheblich die Effektivität bei der Regenerierung des Filtermaterials.

Die Erfindung wird im Folgenden anhand von Ausführungsbeispielen unter Bezugnahme auf die beiliegenden, schematischen Zeichnungen näher erläutert. Es zeigen:
- Figur 1: einen seitlichen Schnitt durch das Filtermaterial, bei dem drei Filtertuch-Lagen durch Fäden zusammengeheftet sind;
- Figur 2: eine Draufsicht auf das Filtermaterial mit den Ausbauchungen; und
- Figur 3: ein Schnitt einer Ausbauchung mit ihren charakteristischen Abmessungen.

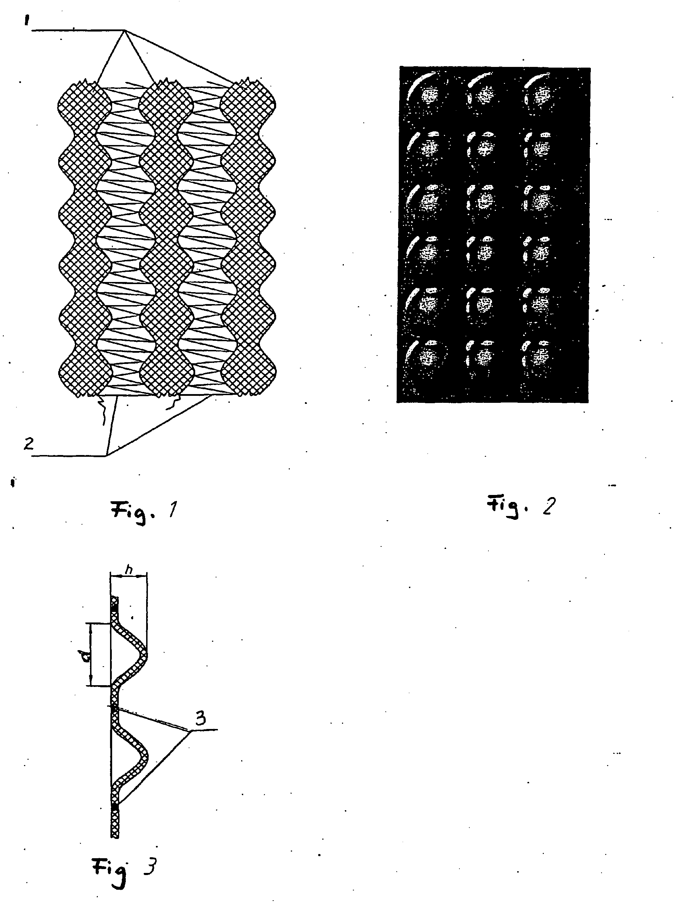

Wie man aus Figur 1 erkennen kann, besteht bei der dargestellten Variante das erfindungsgemäße Filtermaterial aus insgesamt drei streifen- oder bandförmigen Lagen 1 aus Filtertuch, die auf beiden Seiten durch gewellte Linien begrenzt sind.

Dadurch entstehen Ausbauchungen ohne scharfe Ecken, die im Querschnitt etwa die Form von Sinuskurven haben.

Die drei Lagen des Filtertuchs werden durch Fäden 2 in den zusammenfallenden Höhen und Senken zusammengeheftet.

Die Lagen 1 aus dem Filtertuch können aus einem gewebten oder einem Non-Woven-Textilmaterial bestehen. Bei Verwendung von Non-Woven-Filtertüchern können die im Querschnitt sinusförmigen Ausbauchungen auf den reliefartigen Oberflächen der Lagen 1 zwischen entsprechend profilierten Walzen geformt werden.

Figur 2 zeigt eine Draufsicht auf die Oberfläche eines Filtertuches mit den regelmäßig angeordneten Ausbauchungen.

Figur 3 stellt einen Querschnitt durch eine Lage 1 aus einem Filtertuch mit den charakteristischen Abmessungen einer Ausbauchung dar, nämlich der Höhe h der Ausbauchung und dem der Durchmesser d einer Ausbauchung an ihrer Basis. Das Verhältnis h/d sollte im Bereich zwischen 0,1 und 10,0 liegen.

Zwischen den Ausbauchungen einer Lage ist gemäß der Darstellung in Figur 3 ein Verstärkungsstreifen 3 aus einem festeren Material als das Filtertuch angeordnet. Der Verstärkungsstreifen kann aus Stahlfäden oder Cord-Streifen bestehen, wie sie für die Herstellung von Reifen verwendet werden.

## Patentansprüche

1. Filtermaterial mit mindestens einer Lage aus Filtertuch mit Ausbauchungen in Richtung des zu filternden Stroms, wobei die bzw. jede Lage (1) aus Filtertuch auf mindestens einer Fläche in Richtung des zu filternden Gas- oder Flüssigkeitsstroms mit reliefartigen Ausbauchungen ohne scharfe Ecken versehen ist, **dadurch gekennzeichnet, dass** das Verhältnis h/d von Höhe h zu Basis-Durchmesser d jeder Ausbauchung im Bereich von 0,1 bis 10,0 liegt und, zwischen den Ausbauchungen der bzw. jeder Lage (1) Verstärkungsstreifen (3) angeordnet sind.

2. Filtermaterial nach Anspruch 1, **dadurch gekennzeichnet, dass** die Verstärkungsstreifen (3) aus einem festeren Material als das Filtertuch bestehen, insbesondere aus Cord.

3. Filtermaterial nach Anspruch 1 oder 2, **dadurch gekennzeichnet, dass** die Ausbauchungen im Querschnitt etwa die Form einer Sinuskurve haben.

4. Filtermaterial nach einem der Ansprüche 1 bis 3, **dadurch gekennzeichnet, dass** für Non-Woven-Filtertücher die Ausbauchungen zwischen entsprechend profilierten Walzen ausgebildet werden.

## Claims

1. A filter material comprising at least one layer of filter cloth with bulges in the direction of the flow to be filtered, wherein the layer or each layer (1) of filter cloth is provided, on at least one surface in the direction of the gas or liquid flow to be filtered, with relief-like bulges having no sharp edges, **characterised in that** the ratio h/d of the height h to the base diameter d of each bulge is in the range of 0.1 to 10.0, and reinforcing strips (3) are arranged between the bulges of the layer or of each layer (1).

2. The filter material according to claim 1, **characterised in that** the reinforcing strips (3) consist of a stronger material than the filter cloth and in particular consist of cord.

3. The filter material according to claim 1 or 2, **characterised in that** in cross-section, the bulges have approximately the shape of a sine curve.

4. The filter material according to any one of claims 1 to 3, **characterised in that** for non-woven filter cloths, the bulges are formed between correspondingly profiled rollers.

## Revendications

1. Matériau filtrant avec au moins une couche en tissu filtrant avec des renflements en direction du courant à filtrer, dans lequel la ou chaque couche (1) en tissu filtrant est pourvue d'au moins une surface dans la direction du courant de gaz ou de liquide à filtrer avec des renflements en relief sans angle vif, **caractérisé en ce que** le rapport h/d entre la hauteur h et le diamètre de base d de chaque renflement se situe entre 0,1 et 10,0, et entre les renflements de la ou de chaque couche (1) sont disposées des bandes de renfort (3).

2. Matériau filtrant selon la revendication 1, **caractérisé en ce que** les bandes de renfort (3) sont constituées d'un matériau plus solide que le tissu filtrant, en particulier de corde.

3. Matériau filtrant selon l'une quelconque des revendications 1 ou 2, **caractérisé en ce que** les renflements ont une section transversale qui présente à peu près la forme d'une courbe sinusoïdale.

4. Matériau filtrant selon l'une quelconque des revendications 1 à 3, **caractérisé en ce que** pour les tissus filtrants en non-tissé, les renflements sont réalisés entre des cylindres profilés en conséquence.
